# EUROPEAN PATENT SPECIFICATION

(11) **EP 3 883 147 B1**
(45) Date of publication and mention of the grant of the patent: **16.10.2024**
(21) Application number: 18940058.3
(22) Date of filing: 14.11.2018
(51) Int. Cl.: H04B 10/27, B25J 19/00, H05K 13/00

(54) **OPTICAL COMMUNICATION DEVICE AND WORKING MACHINE**
OPTISCHE KOMMUNIKATIONSVORRICHTUNG UND ARBEITSMASCHINE
DISPOSITIF DE COMMUNICATION OPTIQUE ET MACHINE DE TRAVAIL

(43) Date of publication of application: 22.09.2021
(73) Proprietor: Fuji Corporation, Chiryu-shi, Aichi 472-8686 (JP)
(72) Inventor: WATANABE, Kenji, Chiryu-shi, Aichi 472-8686 (JP); NAGASAKA, Nobuo, Chiryu-shi, Aichi 472-8686 (JP); KANAI, Hidekazu, Chiryu-shi, Aichi 472-8686 (JP)
(74) Representative: Grünecker Patent- und Rechtsanwälte PartG mbB
(86) International application number: PCT/JP2018/042132
(87) International publication number: WO 2020/100231

(56) References cited:
- EP-A1- 3 229 391
- EP-A1- 3 267 664
- WO-A1-2016/088214
- WO-A1-2016/142999
- DE-A1- 102016 205 172
- JP-A- 2017 229 079
- JP-A- 2018 042 128
- US-A1- 2018 281 198

## Description

### Technical Field

The present disclosure relates to an optical communication device including a slave of an industrial network, and a working machine including the optical communication device.

### Background art

Network communication technologies, represented by the Internet, are also used in the field of factory automation (FA) and are referred to as an industrial network designed for the FA field. For example, in an electronic component mounting device described in Patent Literature 1 below, work-related data is transmitted by use of the industrial network technology. As one form of control in the industrial network, for example, a slave and a master, being configured to supervise and control the slave, are installed. The slave controls sensors, relays, switches, and the like which are attached to the electronic component mounting device based on control data transmitted from the master by way of the industrial network. In the electronic component mounting device described in Patent Literature 1, control data processed by the slave is multiplexed by use of a multiplex processing device and is then transmitted to the master or another slave by way of a multiplex communication line.
Patent Literature 2, Patent Literature 3 and Patent Literature 4 provide further optical communication devices according to the prior art.

### Patent Literature

Patent Literature 1: International Publication No. WO2016/142999
Patent Literature 2: EP 3229391 A1
Patent Literature 3: DE 102016205172 A1
Patent Literature 4: EP3267664 A1

### Summary of the Invention

### Technical Problem

The slave described above is configured by, for example, a programmable logic device configuring a logic circuit based on the configuration information. Some of slaves of this type switch two different modes between a safe mode and a user mode based on the configuration information. The slave is rebooted, for example, in order to reconfigure the logic circuit in association with the mode switching. In association with the reboot of the slave, it is necessary to disconnect the communication with another device (a master or another slave) in the industrial network. However, there is a possibility such that another device holds its own state for a predetermined period of time even after the communication with the slave is disconnected, whereby the data on the communication line connected to the slave is transmitted. As a result, in the case that erroneous data is generated in the control data due to the disconnection of the industrial network communication, there has been a risk of transmitting the control data with the erroneous data so generated to the other slave or the master.

The present disclosure has been made in view of the problem described above, and an object thereof is to provide an optical communication device and a working machine that are capable of suppressing transmission of control data with an erroneous data so generated in a slave configured to perform mode switching.

### SOLUTION TO PROBLEM

In order to solve the problem described above, the present description discloses an optical communication device including a slave connected to an industrial network by optical communication and having a dual-sided boot function of a safe mode and a user mode, and a notification device for transmitting transition notification information indicating that the slave has transitioned to the user mode of the dual-sided boot to another device in the industrial network, and a CDR section for separating a clock embedded in serial data transmitted by a serial communication of the optical communication, wherein the slave has: the safe mode for configuring a first logic circuit by first configuration information ; and the user mode for configuring a second logic circuit by second configuration information different from the first configuration information, the second logic circuit processing control data transmitted from a master in the industrial network through the serial communication. When referred to herein, the "industrial network" is a network for transmitting control data for controlling relays, switches, and the like by use of communication standards such as EtherCAT (a registered trademark), MECHATROLINK (a registered trademark)-III, Profinet (a registered trademark), and the CDR circuit is a so-called clock data recovery (CDR) circuit, and the like.

In addition, the contents of the present disclosure are not limited to the optical communication device and are hence useful in application to a working machine including such an optical communication device.

### ADVANTAGEOUS EFFECT OF THE INVENTION

According to the optical communication device or the like of the present disclosure, when the slave transitions to the user mode, the remaining slave or the master is notified of the transition of the slave to the user mode by the transition notification information. The slave or the like that receives the transition notification information can start various types of processing operations (construction of an industrial network or the like) on the optical communication device after the slave or the like confirms the transition to the user mode, that is, after a situation results in which the mode transition does not disconnect the industrial network. As a result, it is possible to suppress the transmission of control data in which an error is generated.

### BRIEF DESCRIPTION OF DRAWINGS

Fig. 1 is a plan view illustrating a schematic configuration of a component-mounting system of the present embodiment.
Fig. 2 is a perspective view illustrating a schematic configuration of a component mounter and a loader.
Fig. 3 is a block diagram of a multiplex communication system.
Fig. 4 is a block diagram illustrating configurations of a first multiplex processing device of a fixed multiplexing section and a second multiplex processing device of a head section.
Fig. 5 is a block diagram illustrating a schematic configuration of a dummy PHY.
Fig. 6 is a sequence diagram when the first multiplex processing device and the second multiplex processing device are booted.
Fig. 7 is a flowchart showing processing contents of the dummy PHY.

### DESCRIPTION OF EMBODIMENTS

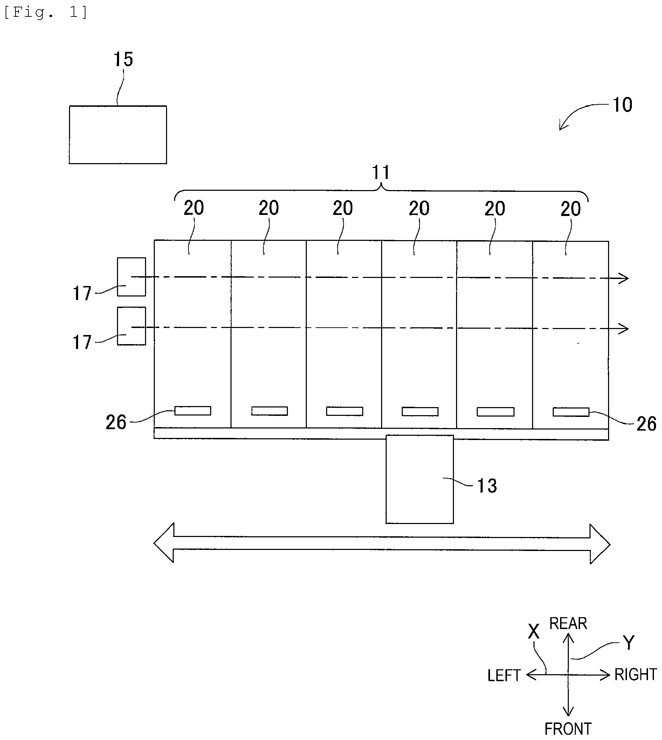

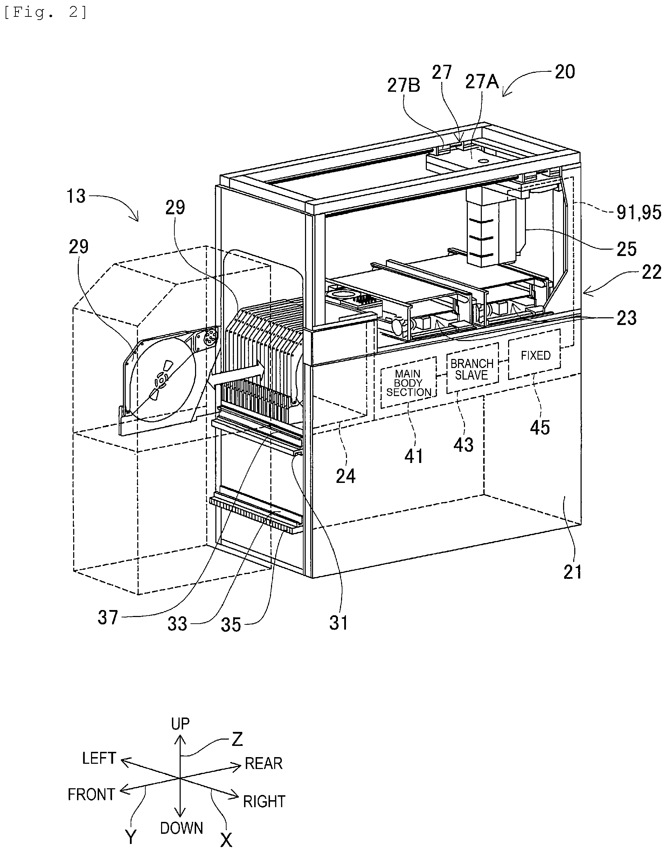

Hereinafter, an embodiment of the present disclosure will be described with reference to the drawings. Fig. 1 is a plan view illustrating a schematic configuration of component-mounting system 10 of the present embodiment. Fig. 2 is a perspective view illustrating a schematic configuration of component mounter 20 and loader 13. In the following description, as shown in Fig. 1, a left-right direction is referred to as an X-direction, a front-rear direction is referred to as a Y-direction, and a direction perpendicular to the X-direction and the Y-direction is referred to as a Z-direction (an up-down direction).

As illustrated in Fig. 1, component-mounting system 10 includes production line 11, loader 13, and management computer 15. Production line 11 has multiple component mounters 20 aligned in the X-direction, and mounts an electronic component on board 17. For example, board 17 is conveyed from left-side component mounter 20 to right-side component mounter 20 illustrated in Fig. 1, and the electronic component is mounted on board 17 while the the board is conveyed.

As illustrated in Fig. 2, component mounter 20 includes base 21 and module 22. Base 21 has a substantially rectangular box shape that is long in the Y-direction and is placed on a floor or the like of a factory in which component mounter 20 is installed. Base 21 is adjusted in position in the up-down direction so as, for example, to align the position of board conveyance device 23 in module 22 thereof with the position of board conveyance device 23 in module 22 lying adjacent thereto, and relevant base 21 and base 21 of adjacent component mounter 20 are fixed to each other. Module 22 is a device for mounting or the like an electronic component on board 17 and is placed on base 21. Module 22 can be pulled out to a nearer side in the front-rear direction relevant to base 21 and can be replaced with another module 22.

Module 22 includes board conveyance device 23, feeder base 24, head section 25, and head moving mechanism 27. Board conveyance device 23 is provided in module 22 and conveys board 17 in the X-direction. Feeder base 24 is a base provided at the front of module 22 and having an L-shape in side view. Feeder base 24 includes multiple slots (not shown) that are aligned in the X-direction. Feeder 29 for supplying electronic components is mounted in each of the slots of feeder base 24. For example, feeder 29 is a tape feeder for supplying the electronic component from a tape which accommodates the electronic component at a predetermined pitch. As shown in Fig. 1, touch panel 26, by which controlling and inputting operations are performed on component mounter 20, is provided on an upper cover of module 22. Fig. 2 shows a state in which the upper cover and touch panel 26 are removed.

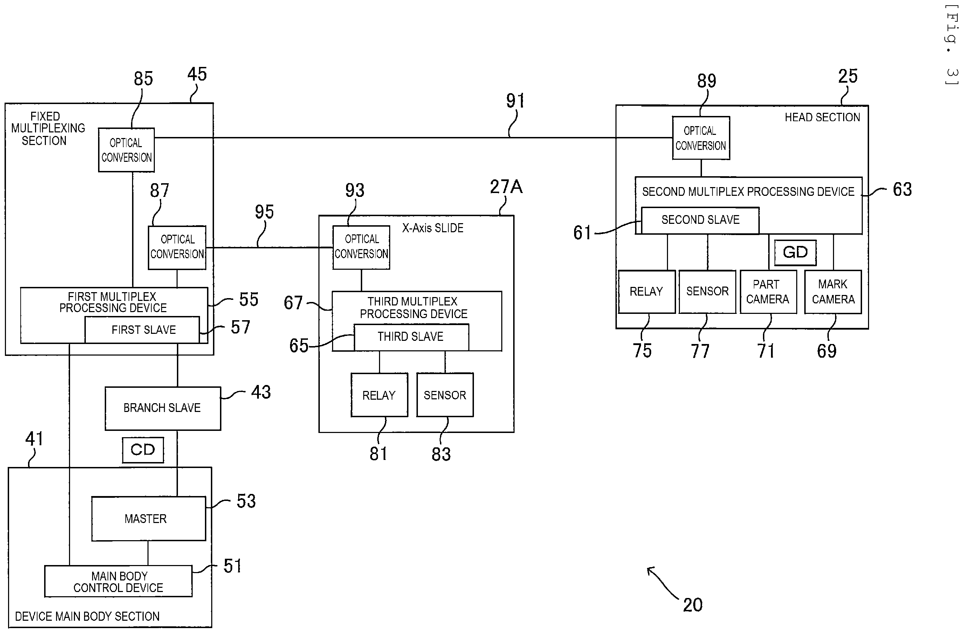

Head section 25 includes a suction nozzle (not illustrated) for pick up the electronic component supplied from feeder 29, and mounts the electronic component picked up by the suction nozzle on board 17. Head section 25 has, for example, an electromagnetic motor (not shown) as a drive source for changing the positions of multiple suction nozzles or the position of each of the suction nozzles. Head moving mechanism 27 moves head section 25 to an arbitrary position in the X-direction and the Y-direction in an upper space of module 22. Specifically, head moving mechanism 27 includes X-axis slide mechanism 27A for moving head section 25 in the X-direction, and Y-axis slide mechanism 27B for moving head section 25 in the Y-direction. X-axis slide mechanism 27A is attached to Y-axis slide mechanism 27B. X-axis slide mechanism 27A includes third slave 65 (refer to Fig. 3) that is connected to an industrial network, which will be described later. Various types of elements such as relay 81 and sensor 83 (refer to Fig. 3) that are provided on X-axis slide mechanism 27A are connected to third slave 65, so that third slave 65 processes signals that are inputted into and outputted from the various types of elements based on control data CD received from master 53 (refer to Fig. 3) of device main body section 41.

Y-axis slide mechanism 27B has a linear motor (not illustrated) as a drive source. X-axis slide mechanism 27A moves to arbitrary position in the Y-direction, based on the drive of the linear motor of Y-axis slide mechanism 27B. In addition, X-axis slide mechanism 27A has a linear motor (not illustrated) as a drive source. Head section 25 is attached to X-axis slide mechanism 27A, and moves to arbitrary position in the X-direction, based on the drive of the linear motor of X-axis slide mechanism 27A. Thus, head section 25 moves to arbitrary position in the upper space of module 22 as X-axis slide mechanism 27A and Y-axis slide mechanism 27B are driven accordingly.

In addition, head section 25 is attached to X-axis slide mechanism 27A via a connector, is attachable and detachable by one touch, and head section 25 can be changed to different types such as a dispenser head, for example. Thus, in the present embodiment, head section 25 can be detachably attached to component mounter 20 (an example of a working machine). Mark camera 69 (refer to Fig. 3) for imaging board 17 is fixed to head section 25 in such a state that mark camera 69 is directed downwards. Mark camera 69 can image arbitrary position of board 17 from above in association with movement of head section 25. Image processing is carried out on image data GD captured by mark camera 69 in main body control device 51 (refer to Fig. 3) of module 22. Main body control device 51 obtains information on board 17, an error in mounting position, and the like through image processing.

Head section 25 includes second slave 61 (refer to Fig. 3) connected to the industrial network. Various types of elements such as relay 75 and sensor 77 that are provided on head section 25 are connected to second slave 61, so that second slave 61 processes signals that are inputted into and outputted from the various types of elements based on control data CD received from master 53 (refer to Fig. 3) of device main body section 41. In addition, part camera 71 for imaging an electronic component picked up by and held to the suction nozzle is provided on head section 25. Image processing is carried out on image data GD captured by part camera 71 in main body control device 51 (refer to Fig. 3) of module 22. Main body control device 51 obtains an error or the like in the holding position of the electronic component in the suction nozzle through image processing.

In addition, as shown in Fig. 2, upper guide rail 31, lower guide rail 33, rack gear 35, and non-contact power supply coil 37 are provided on a front surface of base 21. Upper guide rail 31 is a rail having a U-shaped a cross section and extending in the X-direction, and an opening thereof faces downward. Lower guide rail 33 is a rail having an L-shaped cross-section and extending in the X-direction and is attached to a front face of base 21 on a perpendicular surface thereof, while a horizontal surface thereof extends to the front. Rack gear 35 is a gear disposed in a lower section of lower guide rail 33 and extending in the X-direction, and in which multiple longitudinal grooves are engraved on a front surface of rack gear 35. Upper guide rail 31, lower guide rail 33, and rack gear 35 of base 21 can detachably be coupled to upper guide rail 31, lower guide rail 33, and rack gear 35 of adjacent base 21. Therefore, in component mounter 20, the number of component mounters 20 aligned in production line 11 can be increased or decreased. Non-contact power supply coil 37 is a coil disposed in an upper section of upper guide rail 31 and disposed along the X-direction, and supplies power to loader 13.

Loader 13 is a device for automatically replenish and recover feeder 29 to and from component mounter 20, and includes a clamping section (not illustrated) for clamping feeder 29. Loader 13, has an upper roller (not illustrated) to be inserted into upper guide rail 31, and a lower roller (not illustrated) to be inserted into lower guide rail 33. In addition, loader 13 has a motor serving as a drive source. A gear that meshes with rack gear 35 is attached to an output shaft of the motor. Loader 13 includes a power receiving coil that receives the power supplied from non-contact power supply coil 37 of component mounter 20. Loader 13 supplies the power received from non-contact power supply coil 37 to the motor. In this manner, since the gear is rotated by the motor, loader 13 can move in the X-direction (rightward-leftward direction). In addition, loader 13 rotates a roller inside upper guide rail 31 and lower guide rail 33, and can move in the X-direction while holding a position in the upward-downward direction and the forward-rearward direction.

Management computer 15 shown in Fig. 1 is a device for collectively managing component mounting system 10. For example, component mounter 20 of production line 11 starts a mounting operation of the electronic component, based on the management of management computer 15. Component mounter 20 causes head section 25 to perform the mounting operation of the electronic component while conveying board 17. In addition, management computer 15 monitors the number of remaining electronic components of feeder 29. For example, for example, when management computer 15 determines that feeder 29 needs to be replenished, management computer 15 causes a screen to display an instruction that feeder 29 accommodating a component type to be replenished is set in loader 13. A user checks the screen, and sets feeder 29 in loader 13. When detecting that desired feeder 29 is set in loader 13, management computer 15 instructs loader 13 to start a replenishment operation. Loader 13 moves to a position in front of component mounter 20 from which loader 13 receives the instruction, holds feeder 29 set by the user with a gripping section, and mounts relevant feeder 29 in the slot of feeder base 24. In this manner, new feeder 29 is replenished to component mounter 20. In addition, loader 13 holds feeder 29 in which component shortage is occurring with the gripping section and pulls out the feeder 29 from feeder base 24 for recovery. In this way, replenishment of new feeder 29 and recovery of feeder 29 having no more component can be automatically performed by loader 13.

Next, a multiplex communication system included in component mounter 20 will be described. Fig. 3 is a block diagram illustrating a configuration of the multiplex communication system applied to component mounter 20. As illustrated in Fig. 2, component mounter 20 includes device main body section 41, branch slave 43, and fixed multiplexing section 45 within module 22. Device main body section 41, branch slave 43, and fixed multiplexing section 45 are provided below board conveyance device 23 in module 22.

As illustrated in Fig. 3, in the multiplex communication system of the present embodiment, data transmission is carried out through multiplex communication between device main body 41, branch slave 43, and fixed multiplexing section 45 which are fixed within module 22 and a movable section (X-axis slide mechanism 27A and head portion 25) moving inside module 22. Device main body section 41 has main body control device 51 and master 53. Branch slave 43 is connected with master 53. Fixed multiplexing section 45 includes first multiplex processing device 55. First slave 57 of first multiplex processing device 55 is connected with branch slave 43. Head section 25 includes second multiplex processing device 63 having second slave 61. X-axis slide mechanism 27A includes third multiplex processing device 67 having third slave 65.

Branch slave 43, first slave 57, second slave 61, and third slave 65 are controlled by master 53. Master 53 collectively controls the transmission of control data CD for controlling branch slave 43, first slave 57, second slave 61, and third slave 65 which are connected to the industrial network. For example, the Industrial network is EtherCAT (registered trademark). The industrial network of the present disclosure is not limited to the EtherCAT (registered trademark), and for example, other networks (communication standards) such as MECHATROLINK (registered trademark)-III and Profinet (registered trademark) can be adopted.

Main body control device 51 is, for example, a processing circuit configured mainly by CPU, and receives control data CD collected by master 53, image data GD received by first multiplex processing device 55, and the like which are inputted thereinto to thereby determine subsequent control contents (type, mounting position, and the like of an electronic component to be mounted subsequently). In addition, main body control device 51 causes master 53 to transmit control data CD corresponding to the determined control contents. Master 53 transmits control data CD to branch slave 43, first slave 57, second slave 61, and third slave 65 via the industrial network.

Head section 25 has second multiplex processing device 63, mark camera 69, part camera 71, and the like, which are described above. Second slave 61 processes signals which are inputted into and outputted from various elements (relay 81, sensor 83, and the like) based on control data CD received from master 53 of device main body section 41. For example, a write area and a read area are set in control data CD for each of the multiple slaves (second slave 61 or the like). Second slave 61 drives relay 81 and sensor 83 based on data read from the read area for second slave 61 in control data CD received from master 53. In addition, second slave 61 writes data corresponding to a signal indicating the results of driving of relay 81 or a detection signal of sensor 83 in the write area for second slave 61 in control data CD. Second slave 61 transmits control data CD on which the writing has been completed to master 53 or another slave (third slave 65 or the like). Control data CD is transmitted by multiplex high-speed serial communication, which will be described later. Similarly to second slave 61, first slave 57 of first multiplex processing device 55 controls various elements included in fixed multiplexing section 45 based on control data CD received from master 53 by way of branch slave 43.

As with second slave 61 of head section 25 described above, third slave 65 of X-axis slide mechanism 27A controls relay 81 and sensor 83 attached to X-axis slide mechanism 27A based on control data CD. Control data CD is transmitted by being circulated through individual slaves in the order, for example, of master 53, branch slave 43, first slave 57, second slave 61, first slave 57, third slave 65, first slave 57, branch slave 43, and master 53. Third slave 65 controls relay 81 and the like based on data in the read area of control data CD received from master 53 by way of first slave 57. In addition, third slave 65 writes detection data or the like of sensor 83 into the write area of control data CD and transmits it to master 53 by way of first slave 57.

There is imposed no specific limitation on the various elements (elements controlled by control data CD) that head section 25, X-axis slide mechanism 27A, and the like have. For example, relay 81 of X-axis slide mechanism 27A is a limit switch for outputting a drive signal that drives a brake of the linear motor of X-axis slide mechanism 27A. Relay 81 outputs a drive signal to drive the brake to suppress, for example, an overrun of X-axis slide mechanism 27A. In addition, sensor 83 of X-axis slide mechanism 27A is, for example, a board height sensor for measuring a height of an upper surface of board 17 based on a reference height position set in component mounter 20.

Next, multiplex communication will be described for transmitting control data CD of the industrial network and image data GD of part camera 71 or the like. Component mounter 20 of the present embodiment executes the data transmission among fixed multiplexing section 45, X-axis slide mechanism 27A, and head section 25 through multiplexing high-speed serial communication. As illustrated in Fig. 3, fixed multiplexing section 45 includes optical conversion modules 85, 87 in addition to first multiplex processing device 55 described above. Optical conversion module 85 is connected with optical conversion module 89 included in head section 25 by way of optical fiber cable 91. Similarly, optical conversion module 87 of fixed multiplexing section 45 is connected with optical conversion module 93 included in X-axis slide mechanism 27A by way of optical fiber cable 95. Optical fiber cables 91, 95 each have an improved bending resistance, for example, by adjusting arrangements and thicknesses of optical fiber lines in the cables. As a result, even in the case that optical fiber cables 91, 95 are bent in association with movements of head section 25 and X-axis slide mechanism 27A, the optical fiber lines can be prevented from being damaged, thereby making it possible to transmit data stably. It should be noted that the communication for connecting fixed multiplex processing section 45, head section 25, and X-axis slide mechanism 27A with each other is not limited to such an optical communication, and hence, for example, a packet communication using a LAN cable conforming to the communication standard of Gigabit Ethernet (registered trademark) may be used instead. The communication system provided for component mounter 20 is not limited to the wired communication system, and hence, a wireless communication system may be used instead.

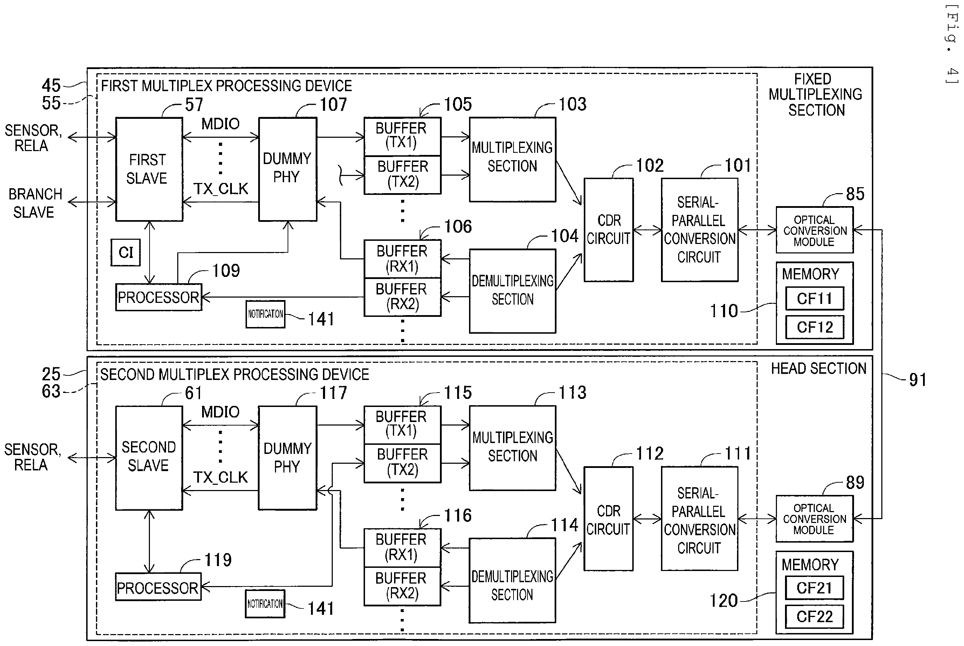

Next, communication between first multiplex processing device 55 and second multiplex processing device 63 will be described. Since the processing contents of the communication between first multiplex processing device 55 and third multiplex processing device 67 are the same as the processing contents of the communication between first multiplex processing device 55 and second multiplex processing device 63, the description of the former will be omitted as required from time to time. FIG. 4 shows configurations of first multiplex processing device 55 of fixed multiplexing section 45 and second multiplex processing device 63 of head section 25.

As shown in Fig. 4, first multiplex processing device 55 of fixed multiplexing section 45 includes serial-parallel conversion circuit 101, CDR circuit 102, multiplexing section 103, demultiplexing section 104, transmission buffer section 105, reception buffer section 106, dummy PHY 107, and processor 109 in addition to first slave 57 described above. In addition, second multiplex processing device 63 of head section 25 includes serial-parallel conversion circuit 111, CDR circuit 112, multiplexing section 113, demultiplexing section 114, transmission buffer section 115, reception buffer section 116, dummy PHY 117, and processor 119, in addition to second slave 61 described above. As shown in Fig. 4, first multiplex processing device 55 and second multiplex processing device 63 have the same configuration. As a result, in the following description, the configuration of first multiplex processing device 55 will mainly be described, and the description of second multiplex processing device 63 will be omitted as required from time to time.

Serial-parallel conversion circuit 101 is connected to optical fiber cable 91 by way of optical conversion module 85. Optical conversion module 85 is a physical interface for executing a conversion between an optical signal and a digital signal. Optical conversion module 85 is connected to serial-parallel conversion circuit 101, so as to convert data inputted from serial-parallel conversion circuit 101 into an optical signal. Optical conversion module 85 transmits the optical signal resulting from the conversion to optical conversion module 89 of head section 25 via optical fiber cable 91. In addition, optical conversion module 85 converts an optical signal received from optical conversion module 89 of head section 25 into a digital signal (a serial signal) and outputs the digital signal resulting from the conversion to serial-parallel conversion circuit 101.

First multiplex processing device 55 is, for example, a programmable logic device such as a Field Programmable Gate Array (FPGA). First slave 57, second slave 61, and third slave 65 are, for example, IP cores used to configure logic circuits of logic devices. First multiplex processing device 55 is not limited to FPGA, and hence, a programmable logic device (PLD) or a complex programmable logic device (CPLD) may be used therefor. In addition, in first multiplex processing device 55, other circuits than first slave 57 may be configured by an application-specific integrated circuit (ASIC) or the like.

Fixed multiplexing section 45 includes memory 110. Memory 110 stores first configuration information CF11 and second configuration information CF12 which configure a logic circuit of FPGA. Similarly, memory 120 of head section 25 stores first configuration information CF21 and second configuration information CF22. First multiplex processing device 55 constructs logic circuits for serial-parallel conversion circuit 101, CDR circuit 102, multiplexing section 103, demultiplexing section 104, transmission buffer section 105, reception buffer section 106, dummy PHY107, and first slave 57 based on first configuration information CF11 or second configuration information CF12 stored in memory 110. Memories 110, 120 are, for example, a non-volatile memory such as EEPROM. Memories 110, 120 are not limited to such a non-volatile memory, and may be a volatile memory such as SRAM. The storage device for storing the configuration information is not limited to the memory and may be another type of storage device such as a hard disk.

First multiplex processing device 55 of the present embodiment has a dual-sided boot function of a safe mode and a user mode. First multiplex processing device 55 has, for example, a safe mode for reading first configuration information CF11 from memory 110 to thereby construct serial-parallel conversion circuit 101 (an example of a first logic circuit) or the like based on first configuration information CF11 so read. In addition, first multiplex processing device 55 includes a user mode for reading second configuration information CF12 from memory 110 to thereby construct serial-parallel conversion circuit 101 (an example of a second logic circuit) or the like based on second configuration information CF12 so read. First multiplex processing device 55 enters, for example, the safe mode at an initial stage after component mounter 20 is charged from a power supply to thereby be booted, subsequently transitions from the safe mode to the user mode, and transmits control data CD of the industrial network in the user mode. In addition, a mode transition occurs in head section 25 not only when component mounter 20 is charged from the power supply but also when head section 25 is replaced with another head section 25. When attached to X-axis slide mechanism 27A, head section 25 starts a booting processing operation and then transitions from the safe mode to the user mode.

First multiplex processing device 55 verifies, for example, second configuration information CF12 in the safe mode. For example, in the case that first multiplex processing device 55 constructs serial-parallel conversion circuit 101 or the like based on first configuration information CF11 in the safe mode and thereafter configures a logic circuit (serial-parallel conversion circuit 101 or the like) based on second configuration information CF12 in the user mode, first multiplex processing device 55 determines whether the configuration of a logic circuit can be performed normally. First multiplex processing device 55 inspects whether there is no error in data of second configuration information CF12 or whether there is no error in connection of or the result of processing by the logic circuit when the logic circuit is configured based on second configuration information CF12 and determines whether the configuration of a logic circuit can be performed normally.
when determining that a logic circuit can be configured normally, first multiplex processing device 55 transitions from the safe mode to the user mode. At this time, first multiplex processing device 55 is rebooted to reconfigure a circuit such as serial-parallel conversion circuit 101 or the like and temporarily disconnects the communication with an external section. As a result, the communication with another device or the like that is connected with first multiplex processing device 55 is disconnected by the mode switching.

In addition, when it transitions from the safe mode to the user mode, first multiplex processing device 55 processes data such as control data CD that is transmitted through the communication system using serial-parallel conversion circuit 101 or the like that is configured based on second configuration information CF12. In the present embodiment, first multiplex processing device 55 and head section 25 do not establish an industrial network for transmitting control data CD in the safe mode but execute an establishment process of such an industrial network in the user mode.

In addition, serial-parallel conversion circuit 101 shown in Fig. 4 executes a conversion between serial data and parallel data. Serial-parallel conversion circuit 101 converts serial data inputted from optical conversion module 85 into parallel data and outputs the parallel data resulting from the conversion to CDR circuit 102. Serial-parallel conversion circuit 101 converts parallel data inputted from CDR circuit 102 into serial data and outputs the serial data resulting from the conversion to optical conversion module 85.

CDR circuit 102 is a so-called clock data recovery (CDR) circuit and performs superimposition and separation of clock signals for use for synchronization of transmission and reception. CDR circuit 102 outputs data in which a clock signal is superimposed on multiplexed data inputted from multiplexing section 113 to serial-parallel conversion circuit 101. CDR circuit 102 separates a clock signal superimposed by CDR circuit 112 on a transmission side from the parallel data inputted from serial-parallel conversion circuit 101 and extracts multiplexed data from the parallel data using the separated clock signal. CDR circuit 102 outputs the extracted multiplexed data to demultiplexing section 104.

Multiplexing section 103 multiplexes data inputted from transmission buffer section 105. Multiple transmission buffer sections 105 are provided to match the number of data to be multiplexed. Multiplexing section 103 receives, for example, control data CD of the industrial network, an imaging start signal that is transmitted from main body control device 51 to mark camera 69 or the like, and the like which are inputted thereinto by way of individual transmission buffer sections 105 and then multiplexes them. Multiplexing section 103 executes multiplexing by using, for example, time division multiplexing (TDM). Multiplexing section 103 multiplexes, for example, various data inputted by way of transmission buffer section 105 in accordance with a constant time period (time slot) allocated to an input port, and then outputs the multiplexed data that is so multiplexed to CDR circuit 102. It should be noted that the configurations of the multiplexing communication system shown in Figs. 3 and 4 constitute an example and hence can be changed as required from time to time. For example, an encoder signal of an encoder of the electromagnetic motor serving as the drive source of the suction nozzle of head section 25 or a control command to the encoder may be multiplexed. In the multiplex communication system of the present embodiment shown in Fig. 3, Y-axis slide mechanism 27B is not connected. However, for example, an encoder signal of a linear scale attached to the linear motor of Y-axis slide mechanism 27B may be transmitted by the multiplex communication system.

In addition, as with transmission buffer sections 105, multiple reception buffer sections 106 are provided to match the number of multiplexed data. Demultiplexing section 104 demultiplexes the multiplexed data inputted from CDR circuit 102 to separate data multiplexed into the multiplexed data. Demultiplexing section 104 outputs various types of data so separated to corresponding reception buffer sections 116. As a result, multiplex communication (high-speed serial communication) in which various types of data such as control data CD, image data GD, and the like are multiplexed is executed between fixed multiplexing section 45 and head section 25.

In multiple transmission buffer sections 105, transmission buffer section 105 where control data CD of the industrial network is accumulated is connected to first slave 57 by way of dummy PHY 107. Similarly, in multiple reception buffer sections 106, reception buffer section 106 where control data CD is accumulated is connected to first slave 57 by way of dummy PHY 107. Processor 109 is, for example, a processing device such as CPU mounted on the FPGA board of fixed multiplexing section 45 and executes control over first slave 57 and dummy PHY 107. Processor 109 reads, for example, a program from memory 110 and executes control over first slave 57 and dummy PHY 107. In the following description, there may be a case in which processor 109 for executing programs is described simply by a device name from time to time. For example, a description reading "processor 109 " means "processor 109 for executing programs" from time to time.

### (As for Dummy PHY)

Dummy PHYs 107, 117 shown in Fig. 4 pseudo-generate signals conforming to, for example, the communication standard of media independent interface (MII) and transmit the generated signals to first slave 57 and second slave 61, respectively, for execution of an establishment process of communication. When referred to herein, "pseudo-generate" means, for example, generating a signal of a data format specified by the communication standard of MII by the logic circuits of dummy PHYs 107, 117 that are configured by FPGA. Dummy PHYs 107, 117 have the same configuration. Therefore, in the following description, dummy PHY 107 will be mainly described, and the description of remaining dummy PHY 117 will be omitted as required from time to time.

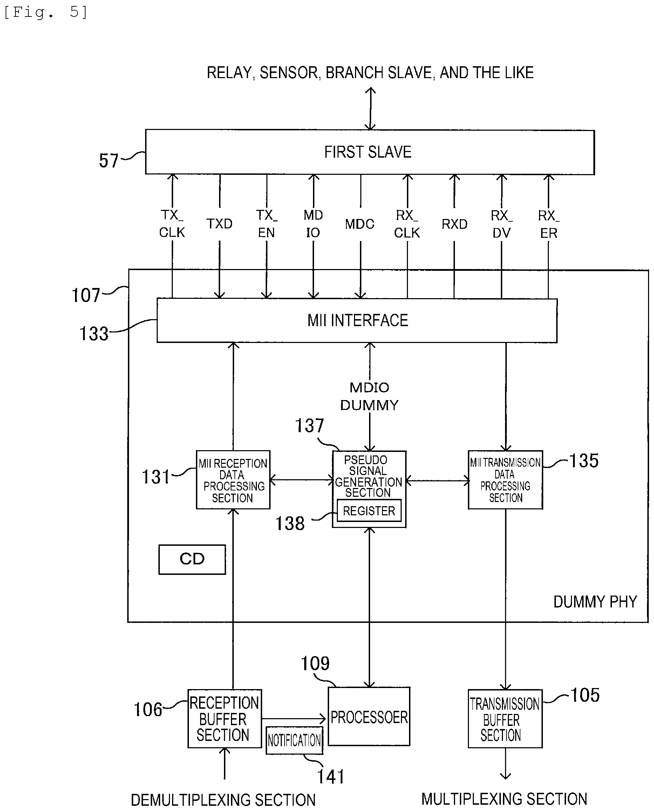

Fig. 5 shows a schematic configuration of dummy PHY 107. Dummy PHY 107 includes MII reception data processing section 131, MII interface 133, MII transmission data processing section 135, and pseudo signal generation section 137. These MII reception data processing section 131 and the like are, for example, a logic circuit of FPGA.

Dummy PHY 107 inputs control data CD demultiplexed by demultiplexing section 104, that is, control data CD received from head section 25 to MII reception data processing section 131. MII interface 133 is an interface connected with first slave 57 and executes a communication conforming to the MII standard. MII reception data processing section 131 outputs control data CD inputted from reception buffer section 106 to first slave 57 by way of MII interface 133. First slave 57 executes, for example, reading processing or the like on control data CD received from second slave 61. In addition, for example, when transmitting control data CD so processed to subsequent third slave 65, first slave 57 transmits the processed control data CD to X-axis slide mechanism 27A by way of dummy PHY (not shown) corresponding to optical conversion module 87.

In addition, MII transmission data processing section 135 of dummy PHY 107 receives data inputted thereinto from first slave 57 by way of MII interface 133. First slave 57 outputs, for example, control data CD received from master 53 (refer to Fig. 3) by way of branch slave 43 to MII transmission data processing section 135 byway of MII interface 133. MII transmission data processing section 135 outputs control data CD inputted from first slave 57 to multiplexing section 103 (refer to Fig. 4) by way of transmission buffer section 105. Multiplexing section 103 multiplexes control data CD inputted from MII transmission data processing section 135 together with other data so as to generate multiplexed data. When referred to herein, the other data means a start signal instructing part camera 71 to start imaging, or the like. As a result, control data CD transmitted from master 53 to first slave 57 by way of branch slave 43 is transmitted to second slave 61.

MII interface 133 transmits and receives a TXD signal (transmission data) and an RXD signal (reception data), which are shown in Fig. 5, to and from first slave 57. MII interface 133 transmits and receives various types of control signals to and from first slave 57 in addition to the TXD signal and the RXD signal. For example, MII interface 133 transmits a transmission clock signal such as a TX_CLK signal, an MDIO (Media Dependent Input/Output) signal for management control, which will be described later, an MDC signal that is a clock signal of the MDIO signal, and the like.

Here, in the case that dummy PHY 107 of the present embodiment is not used, there may be a possibility that first slave 57 has to be connected with transmission buffer section 105, for example, by way of two PHYs and a cable which connects the two PHYs together. Specifically speaking, the two PHYs exchange digital signals and analog signals to transmit data on a cable. A cable for connecting the two PHYs is, for example, a LAN cable conforming to the Ethernet (a registered trademark) standard. Conventionally, when an IP core used in an industrial network is used as first slave 57 and is connected with another circuit such as multiplexing section 103 or demultiplexing section 104, it has been necessary that the IP core or first slave 57 is connected with the multiplexing section 103 or the demultiplexing section 104 by way of those two PHYs and the LAN cable. Then, some of slave IP cores used in the industrial network are set to start communicating with an outside circuit, that is, multiplexing section 103 or the like only after a communication has been established between two PHYs that are connected to each other by a LAN cable.

For example, registers are provided on the two PHYs to indicate whether a communication has been established between the two PHYs. Then, first slave 57 transmits an MDIO signal to the PHYs to acquire information set in the registers of the PHYs. When the register value obtained is a value indicating that a communication is established, first slave 57 starts a communication with multiplexing section 103 or the like by way of the two PHYs and the LAN cable. On the other hand, first slave 57 remains in a state in which first slave 57 does not start a communication with multiplexing section 103 or the like until first slave 57 can obtain a register value indicating an establishment of communication.

Then,pseudo signal generation section 137 of dummy PHY 107 of the present embodiment shown in Fig. 5 obviates the need for the two PHYs and the LAN cable that connects the two PHYs, which are described above, by executing a processing operation of responding to first slave 57 with a register value as done by the PHYs. Further, first multiplex processing device 55 of the present embodiment does not establish an industrial network communication with second multiplex processing device 63 and third multiplex processing device 67 in the safe mode described above. For example, first multiplex processing device 55 does not establish an industrial network communication until first multiplex processing device 55 receives transition notification information 141 indicating that the mode has transitioned to the user mode from downstream-side second multiplex processing device 63. When receiving transition notification information 141 from second multiplex processing device 63 through the multiplex high-speed serial communication, processor 109 of first multiplex processing device 55 instructs dummy PHY 107 to start an establishment process of a communication.

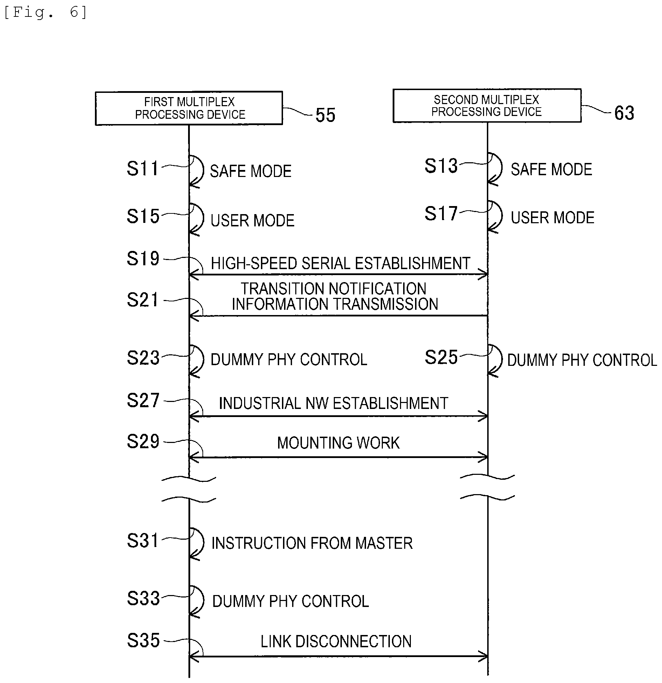

To be specific, Fig. 6 is a sequence diagram when first multiplex processing device 55 and second multiplex processing device 63 are booted. In the following description, as an example, a case will be described in which component mounter 20 is charged by the power supply to start the system of component mounter 20. At first, in Fig. 6, in step 11 (hereinafter, simply referred to as "S"), when component mounter 20 is charged by the power supply, first multiplex processing device 55 reads first configuration information CF11 from memory 110 to configure a logic circuit, transitioning to the safe mode. Similarly, when component mounter 20 is charged by the power supply, second multiplex processing device 63 reads first configuration information CF21 from memory 120 to configure a logic circuit, transitioning to the safe mode (S13).

First and second multiplex processing devices 55, 63 perform verification of the logic circuits based on second configuration information CF12, CF22 in the safe mode. When determining that a normal logic circuit can be configured based on second configuration information CF12, first multiplex processing device 55 reads second configuration information CF12 from memory 110 and configures a logic circuit, transitioning to the user mode (S15). Similarly, When determining that a normal logic circuit can be configured based on second configuration information CF22, second multiplex processing device 63 reads second configuration information CF22 from memory 120 and configures a logic circuit, transitioning to the user mode (S17). At this time, first and second multiplex processing devices 55, 63 are rebooted by reconfigureing the logic circuits.

Here, for example, let's assume that the mode transition timings of first and second multiplex processing devices 55, 63 deviate, first slave 57 of first multiplex processing device 55 transitions to the user mode earlier than second multiplex processing device 63, and first slave 57 of first multiplex processing device 57 starts a communication with second slave 61 of second multiplex processing device 63 which still remains in the safe mode state by attempting to establish an industrial network communication. First slave 57 receives a response from second slave 61 which remains in the safe mode through multiplex communication. Thereafter, when second slave 61, which is delaying in mode transition, is rebooted to transition from the safe mode to the user mode, the established industrial network is disconnected. As a result, even after the industrial network, which is multiplexed into the high-speed serial communication, is disconnected, CDR circuit 102 of first multiplex processing device 55 holds the clock to separate the multiplexed data (control data CD) from the parallel data only for a predetermined time period. Control data CD so separated is transmitted to first slave 57, other slaves (branch slave 43, third slave 65), or master 53. As a result, in the event that an error is generated in relevant control data CD due to the disconnection of the industrial network, there may be a risk such that control data CD in which the error is being generated is transmitted to the other slaves or the like.

In addition, for example, there is a case in which head sections 25 are exchanged after the system of component mounter 20 is booted to start a mounting operation of an electronic component on board 17. In this case, too, similarly to the case in which the mode transitions deviate when the slaves are booted as described above, when replacement head section 25 is mounted on X-axis slide mechanism 27A, the industrial network is disconnected at the timing when second slave 61 transitions from the safe mode to the user mode, thereby resulting in a possibility that control data CD in which an error is being generated is transmitted.

Then, in component mounter 20 of the present embodiment, with dummy PHYs 107, 117 being held in the disconnected state, the industrial network is not established in the safe mode, but the industrial network is started to be established after the transition to the user mode is completed. As shown in Fig. 6, when having transitioned to the user mode, first and second multiplex processing devices 55, 63 perform an establishment process of a multiplex high-speed serial communication (S19). For example, when a high-speed serial communication is established and second slave 61 completes the transition to the user mode, processor 119 of second multiplex processing device 63 transmits transition notification information 141 indicating that second slave 61 has transitioned to the user mode to first multiplex processing device 55 through the high-speed serial communication (S21).

For example, when having completed the configuration of the logic circuit based on second configuration information CF22 and completed the transition to the user mode, second slave 61 outputs information indicating that the transition is completed to processor 119. Processor 119 (an example of a notification device) generates transition notification information 141 based on the information inputted from second slave 61, and outputs it to transmission buffer section 115. The multiplex communication system of the present embodiment can multiplex and transmit, for example, I/O data outputted from processor 119 or the like. Transition notification information 141 is, for example, 1-bit I/O data indicating the presence or absence of a mode transition. Multiplexing section 113 multiplexes transition notification information 141 inputted thereinto by way of transmission buffer section 115, and transmits it to first multiplex processing device 55. Second multiplex processing device 63 may transmit transition notification information 141 to first multiplex processing device 55 by a communication method or a communication line other than the multiplex high-speed serial communication.

Processor 109 of first multiplex processing device 55 receives transition notification information 141 as an input from demultiplexing section 104 by way of reception buffer section 106. When receiving transition notification information 141 as the input, processor 109 determines whether to start an establishment process of the industrial network. Processor 109 determines that the establishment process of the industrial network may be started, for example, when transition notification information 141 is inputted, the high-speed serial communication is established, and first slave 57 completes the transition to the user mode.

When having determined that the establishment process of the industrial network may be started, processor 109 causes dummy PHY 107 to start the establishment process of the industrial network (S23). In addition, after having transmitted transition notification information 141, processor 119 of second multiplex processing device 63 causes dummy PHY 117 to start the establishment process of the industrial network (S25). second multiplex processing device 63 may start the processing operation in S 25 after it receives data indicating the normal response to transition notification information 141 from first multiplex processing device 55.

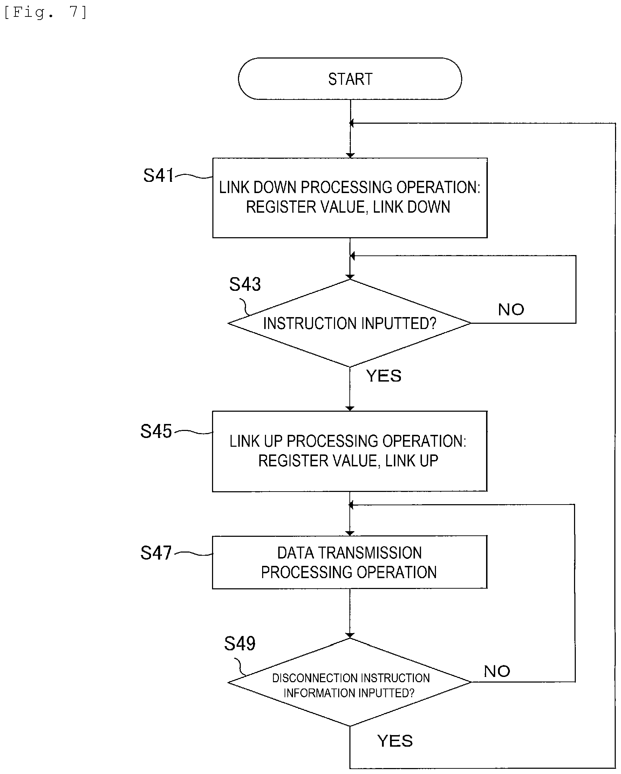

Fig. 7 shows a processing procedure of dummy PHY 107. Dummy PHY 107 starts the processing procedure shown in Fig. 7, for example, after it has configured a logic circuit in its own user mode. At first, in S41, pseudo signal generation section 137 (refer to Fig. 5) of dummy PHY 107 sets a register value. As shown in Fig. 5, pseudo signal generation section 137 includes register 138 for storing information indicating that a communication is established or that the communication is disconnected. Pseudo signal generation section 137 sets a value indicating link down in register 138 until an instruction to start the establishment process of an industrial network is inputted thereinto from processor 109. In this state, dummy PHY 107 responds with the register value indicating link down, even though dummy PHY 107 receives an inquiry in the form of an MDIO signal from first slave 57. As a result, first slave 57 is disconnected from the industrial network with second slave 61, whereby the transmission of control data CD in which erroneous data is being generated is suppressed.

In addition, MII reception data processing section 131 and MII transmission data processing section 135 can control the start or stop of data transmission based on the control by pseudo signal generation section 137. Pseudo signal generation section 137 causes MII reception data processing section 131 and MII transmission data processing section 135 to stop a transmission operation until an instruction to start the establishment process of the industrial network is inputted thereinto from processor 109. With no such instruction being not inputted thereinto, when it receives various inquiries from first slave 57, pseudo signal generation section 137 may execute a processing operation of responding to those inquiries. For example, when it receives an inquiry about a data transfer speed from first slave 57, pseudo signal generation section 137 may execute a so-called auto negotiation in which pseudo signal generation section 137 responds to the inquiry by setting an appropriate communication speed, or the like.

After having executed S 41, pseudo signal generation section 137 executes S 43. In S 43, pseudo signal generation section 137 determines whether an instruction has been inputted thereinto from processor 109 described above. Pseudo signal generation section 137 maintains the link down state until an instruction is inputted thereinto from processor 109 (S43: NO). On the other hand, when it has received an instruction inputted from processor 109 (S43: YES), pseudo signal generation section 137 sets a value indicating a link up in register 138 (S45). As a result, when it receives an inquiry by an MDIO signal from first slave 57, pseudo signal generation section 137 responds to the inquiry with the register value indicating the link up.

Subsequently, in S 47, pseudo signal generation section 137 causes MII reception data processing section 131 and MII transmission data processing section 135 to start a data transmission process. In addition, when it obtains the register value indicating the link up, that is, indicating a start of the establishment process of the industrial network from pseudo signal generation section 137, first slave 57 starts communicating with second slave 61 of second multiplex processing device 63 by way of dummy PHY 107. MII transmission data processing section 135 transfers the data received from first slave 57 to transmission buffer section 105. Additionally, MII reception data processing section 131 transfers the data received from reception buffer section 106 to first slave 57. In this manner, dummy PHY 107 can execute a proper transfer of data between multiplexing section 103 and first slave 57. As a result, first slave 57 and multiplexing section 103 can be connected together by means of dummy PHY 107, thereby obviating the need for the two PHYs and the LAN cable that connects together the two PHYs. Further, first slave 57 and multiplexing section 103 can be connected in association with the completion of mode transition.

As shown in Fig. 6, first slave 57 of first multiplex processing device 55 establishes an industrial network with second slave 61 of second multiplex processing device 63 (S27). As a result, head section 25 can participate in the industrial network on the fixed multiplexing section 45 side (the upstream side). Then, when it has completed the establishment process of all the communications including the industrial network, component mounter 20 executes the mounting work while transmitting control data CD or the like using the multiplex communication system shown in Fig. 3 (S29). In the description made heretofore, the process is described of establishing the industrial network after the mode transitions from the safe mode to the user mode when component mounter 20 is booted by being charged by the power supply. However, a similar process can also be executed, for example, when, in replacing head section 25 with another, replaced head section 25 is mounted on X-axis slide mechanism 27A. That is, even when head section 25 is booted in association with the replacement, whereupon head section 25 transitions from a safe mode to a user mode, the establishment process of an industrial network can be started using transition notification information 141 after head section 25 has transitioned from the safe mode to the user mode.

As has been described heretofore, second multiplex processing device 63 of the present embodiment includes CDR circuit 112 configured to separate a clock embedded in the serial data transmitted by the serial communication which is an optical communication. Second slave 61 has a safe mode in which a logic circuit (an example of a first logic circuit) is configured by first configuration information CF21, and a user mode in which a logic circuit (an example of a second logic circuit) is configured by second configuration information CF22, and control data CD transmitted from master 53 in the industrial network through serial communication is processed in the logic circuit.

Here, in the serial communication for transmitting serial data in which a clock is embedded, CDR circuit 112 is used on a reception side to separate the clock from the serial data. In this type of CDR circuit 112, even after the serial communication itself is disconnected or after a partial communication multiplexed into the serial communication is disconnected, there is a possibility that the data included in the serial data only for a predetermined time period bye holding the clock is separated for output. Second slave 61 is rebooted in response to switching from the safe mode to the user mode. Even after the communication of the industrial network included in the serial communication line is disconnected, CDR circuit 102 of first multiplex processing device 55 at the destination of communication separates the data from the serial data by holding the clock only for a predetermined time period and transmits the separated data to another slave or the like. As a result, in the event that erroneous data is generated in control data CD due to the disconnection of the communication of the industrial network, there may be a possibility that control data CD in which the erroneous data is being generated is transmitted from CDR circuit 102 to another slave, then, to master 53. In contrast with this, with second multiplex processing device 63 of the present embodiment, establishing a serial communication or the like can be executed after notifying the transition to the user mode by transmitting transition notification information 141 in such a serial communication in which a clock is embedded. Thus, with the slave connected to the serial communication line for switching the modes, it is possible to suppress the transmission of control data CD in which an error is being generated.

In addition, processor 119 transmits transition notification information 141 in response to the completion of configuration of a logic circuit based on second configuration information CF22 after the mode transitions from the safe mode to the user mode. According to this configuration, it is possible to transmit transition notification information 141 after the logic circuit is configured in the user mode so as to process control data CD in an ensured fashion.

In addition, after having transmitted transition notification information 141 through optical communication (S21), second slave 61 starts the establishment process of the industrial network (S27). According to this configuration, after having notified that second slave 61 itself has transitioned to the user mode by transmitting transition notification information 141 through optical communication, second slave 61 starts the establishment process of the industrial network. As a result, the establishment process of the industrial network can be started after the ensured transition to the user mode.

Second multiplex processing device 63 includes multiplexing section 113 configured to multiplex control data CD that is transmitted through the industrial network so as to transmit it through multiplex communication. Processor 119 transmits transition notification information 141 through multiplex communication. According to this configuration, by establishing the multiplex communication prior to start of the establishment process of the industrial network, transition notification information 141 can be transmitted through multiplex communication.

Multiplexing section 113 executes multiplexing by a time division multiplexing method. As a result, transition notification information 141 can be multiplexed for transmission using the time division multiplexing method.

In addition, second multiplex processing device 63 includes dummy PHY 117 that is connected between second slave 61 and multiplexing section 113. Dummy PHY 117 pseudo-generates a signal conforming to the communication standard of MII, transmits the signal so generated to second slave 61 to establish a communication with second slave 61, and transmits control data CD between multiplexing section 113 and second slave 61 after the communication has been so established. After it has transmitted transition notification information 141, processor 119 instructs dummy PHY 117 to establish a communication with second slave 61 (S25).

According to this configuration, the number of PHYs that are connected between second slave 61 and multiplexing section 113 can be reduced, so that the transfer of data between multiplexing section 113 and second slave 61 can be executed by dummy PHY 117. In addition, since the number of PHYs can be reduced, the board mounting area can be reduced, thereby making it possible to downsize the device accordingly. Further, since a process of temporarily converting a digital signal to an analog signal in transmission and reception of data between multiplexing section 113 and second slave 61 is omitted, the transfer time of control data CD can be shortened accordingly. As a result, for example, in the case that an EtherCAT frame is circulated in an industrial network, a transfer time necessary for the frame to complete one full circulation of the network can be shortened, thereby making it possible to increase the number of connectable slaves.

In the embodiment described above, the safe mode is a mode for configuring a logic circuit (an example of a first logic circuit) based on first configuring information CF21 when second slave 61 is booted and determining whether a configuration of a logic circuit based on second configuration information CF22 can be performed normally. In addition, the user mode is a mode in which control data CD is processed by the logic circuit (an example of a second logic circuit) so configured after the mode has transitioned from the safe mode to the user mode.

According to this configuration, when the configuration information is changed in association with an improvement in the logic circuit for processing control data CD, the required change can be dealt with by updating second configuration information CF22 in the user mode. In addition, even in the event that there is a problem with second configuration information CF22 so update, the problem can be dealt with by booting using first configuration information CF21 or performing a rewriting operation only on second configuration information CF22. With second slave 61 having these two modes, since a mode switching is generated when second slave 61 is booted, it is extremely effective to notify of a mode transition using transition notification information 141.

### (As for Disconnecting Process)

Next, a process will be described which is performed when communication is disconnected. For example, with component mounter 20 of the present embodiment, head sections 25 can be exchanged with device main body section 41 and fixed multiplexing section 45 being kept charged by the power supply. In exchange work of head sections 25, for example, the communication between first multiplex processing device 55 and second multiplex processing device 63 is disconnected by removing head section 25 from X-axis slide mechanism 27A. In this case, too, similarly to the case in which the device is booted, there may be a possibility that CDR circuit 102 of first multiplex processing device 55 separates the multiplexed data (control data CD) from the parallel data only for a predetermined time period by holding the clock even though the multiplex high-speed serial communication is disconnected. Then, with component mounter 20 of the present embodiment, in the case that head sections 25 are exchanged, thereby triggering a disconnection of the high-speed serial communication (the line of optical fiber cable 91), the industrial network is disconnected by issuing a relevant notification in advance.

For example, the user operates touch panel 26 (refer to Fig. 1) of component mounter 20 to execute an operational input to start the exchange work of head sections 25. Upon receipt of the operational input via touch panel 26, device main body section 41 causes master 53 to transmit control data CD to first slave 57 before disconnecting the high-speed serial communication of optical fiber cable 91 (S31 in Fig. 6). First slave 57 disconnects the communication of the industrial network with head section 25 based on control data CD received from master 53. For example, when it receives control data CD from master 53, first slave 57 outputs disconnection information CI (refer to Fig. 4) instructing a disconnection of the industrial network to processor 109. Upon receipt of disconnection information CI inputted thereinto from first slave 57, processor 109 causes dummy PHY 107 to disconnect the link (S33).

Conditions on which disconnection information CI (control data CD) is transmitted are not limited to the operational input performed by the user as described above. For example, when it determines that head sections 25 need to exchanged in association with a change in board type of board 17 to be fabricated, main body control device 51 may instruct master 53 to transmit control data CD. Alternatively, for example, when it determines that the high-speed serial communication of optical fiber cable 91 needs to be disconnected in association with generation of an error, main body control device 51 may instruct master 53 to transmit control data CD.

Processor 109 outputs, for example, information to pseudo signal generation section 137 which instructs pseudo signal generation section 137 to disconnect the industrial network. In S49 in Fig. 7, after having started transmitting control data CD through the multiplex communication system in S47, pseudo signal generation section 137 determines whether information instructing a disconnection has been inputted thereinto from processor 109. Pseudo signal generation section 137 continues the transmission process by MII reception data processing section 131 and MII transmission data processing section 135 until information instructing a disconnection is inputted thereinto (S 49 : NO). That is, the transmission of control data CD through the multiplex communication system is continued until disconnection information CI in the form of control data CD is transmitted from master 53.

On the other hand, when information instructing a disconnection is inputted thereinto from processor 109 (S 49 : YES), pseudo signal generation section 137 executes the processes from S41 again. In S41, since the communication with first slave 57 is disconnected, pseudo signal generation section 137 sets a register value indicating link down in register 138. When it receives an inquiry by the MDIO signal from first slave 57, dummy PHY 107 responds to the inquiry with the register value indicating link down. For example, after it is booted, first slave 57 periodically executes a processing operation of obtaining the register value in register 138. When first slave 57 obtains the register value indicating link down after it has established a communication with dummy PHY 107, first slave 57 disconnects the communication with dummy PHY 107, that is, the communication with second slave 61. As a result, the industrial network communication between first multiplex processing device 55 and second multiplex processing device 63 is disconnected (S35 in Fig. 6).

Processor 109 may determine whether control data CD is transmitted in the high-speed serial communication of optical fiber cable 91 after disconnection information CI has been inputted thereinto from first slave 57. Then, processor 109 may cause dummy PHY 107 to disconnect the industrial network at a timing when control data CD is not transmitted (S33). As a result, it is possible to suppress the generation of erroneous data or the like in control data CD in association with the disconnection of the communication.

Incidentally, component mounter 20 is an example of the working machine. Second slave 61 is an example of a slave. Second multiplex processing device 63 is an example of an optical communication device. CDR circuit 112 is an example of a CDR section. Multiplexing section 113 is an example of a multiplexing section. Dummy PHY 117 is an example of a pseudo signal transmission section. Processor 119 is an example of a notification device.

As described above, according to the present embodiment described above, the following advantageous effects can be achieved.

In one aspect of the present embodiment, processor 119 of second multiplex processing device 63 transmits transition notification information 141 indicating that second slave 61 has transitioned to the user mode to processor 109. According to this configuration, processor 109 that has received transition notification information 141 can cause various types of processing operations (construction of an industrial network or the like) to be started in second multiplex processing device 63 after confirming the transition to the user mode, that is, after situations result in which there occurs no disconnection of the industrial network due to the mode transition. As a result, it is possible to suppress the transmission of control data CD in which an error is being generated.

It should be noted that the present disclosure is not limited to the embodiment that has been described heretofore, and hence, needless to say, various improvements and changes can be made to the embodiment without departing from the appended set of claims.

For example, in the embodiment, all the logic circuits (serial-parallel conversion circuits 101, 111, CDR circuits 102, 112, and the like) in first multiplex processing device 55 and second multiplex processing device 63 have the dual-sided boot function; however, the present invention is not limited to this. For example, first multiplex processing device 55 and second multiplex processing device 63 may be configured so that only first slave 57 and second slave 61 have the dual-sided boot function. That is, only first slave 57 and second slave 61 may be configured so as to have the user mode and the safe mode.

The communication standard applied to the industrial network is not limited to Ethernet (registered trademark), and hence, other communication standards may be adopted. The interface standard is not limited to MII, and hence,the Gigabit Media Independent Interface (GMII) or the Reduced Media Independent Interface (RMII) may be adopted.

In the above embodiment, three slaves (first to third slaves 57, 61, 65) are connected to one master 53; however, the present invention is not limited to this. The number of masters 53 may be multiple, that is, two or more. The number of slaves may be multiple, that is 2 or 4 or more.

In the embodiment, transition notification information 141 is described as being transmitted by the multiplex communication system; however, transition notification information 141 may be transmitted by use of other communication methods.

Second multiplex processing device 63 may not include CDR circuit 112.

Fixed multiplexing section 45 and head section 25 may be configured so as to be connected by a communication other than the multiplex communication. Processor 119 may transmit transition notification information 141 not only after the mode has transitioned to the user mode and the logic circuit has been configured but also immediately before the logic circuit has been so configured. The multiplex communication between first multiplex processing device 55 and second multiplex processing device 63 may adopt a multiplexing method other than the time division multiplexing method, for example, a frequency multiplexing method.

In the embodiment, component mounter 20 for mounting an electronic component on board 17 is described as being adopted as the example of the working machine in the present disclosure. However, the working machine in the present disclosure is not limited to component mounter 20, and hence, another board working machine such as a solder printing device can be adopted. In addition, for example, the working machine may be a machine tool or a robot that carries out assembly work.

### Reference Signs List

20: Component mounter (working machine), 61: Second slave (slave), 63: Second multiplex processing device (optical communication device), 112: CDR circuit (CDR section), 113: Multiplexing section, 117: Dummy PHY (Pseudo signal transmission section), 119: Processor (Notification device), 141: Transition notification information, CD: Control data, CF21: First configuration information, CF22: Second configuration information

## Claims

1. An optical communication device (63) comprising:
a slave (61) connected to an industrial network by optical communication and having a dual-sided boot function of a safe mode and a user mode;
a notification device (119) for transmitting transition notification information (141) indicating that the slave (61) has transitioned to the user mode of the dual-sided boot to another device in the industrial network, and
a CDR section (112) for separating a clock embedded in serial data transmitted by a serial communication of the optical communication, wherein the slave (61) has:
the safe mode for configuring a first logic circuit by first configuration information (CF21); and
the user mode for configuring a second logic circuit by second configuration information (CF22) different from the first configuration information (CF21), the second logic circuit processing control data (CD) transmitted from a master in the industrial network through the serial communication.

2. The optical communication device (63) according to claim 1, wherein
the notification device (119) transitions from the safe mode to the user mode and transmits the transition notification information (141) in response to completion of configuration of the second logic circuit based on the second configuration information (CF22).

3. The optical communication device (63) according to claim 1 or 2, wherein
the slave (61) starts an establishment process of the industrial network after the transition notification information (141) has been transmitted through the optical communication.

4. The optical communication device (63) according to any one of claims 1 to 3, wherein
the optical communication device (63) further includes a multiplexing section (113) for multiplexing control data (CD) transmitted through the industrial network and transmitting the control data (CD) so multiplexed through multiplex communication, wherein
the notification device (119) transmits the transition notification information (141) through the multiplex communication.

5. The optical communication device (63) according to claim 4, wherein
the multiplexing section (113) performs multiplexing by a time division multiplexing method.

6. The optical communication device (63) according to claim 4 or 5,
the optical communication device (63) further includes a pseudo signal transmission section (117) connected between the slave (61) and the multiplexing section (113), wherein
the pseudo signal transmission section (117) pseudo-generates a signal conforming to a communication standard in the industrial network, transmits the generated signal to the slave (61) to establish a communication with the slave (61), and transmits the control data (CD) between the multiplexing section (113) and the slave (61) after having established the communication, and wherein
the notification device (119) instructs the pseudo signal transmission section (117) to establish a communication with the slave (61) after having transmitted the transition notification information (141).

7. The optical communication device (63) according to claim 1 or 2, wherein
the safe mode is a mode for configuring the first logic circuit based on the first configuration information (CF21) when the slave (61) is booted and determining whether configuration of the second logic circuit based on the second configuration information (CF22) is enabled normally, and wherein
the user mode is a mode for processing the control data (CD) by the second logic circuit after having transitioned from the safe mode.

8. A working machine (20) comprising:
the optical communication device (63) according to any one of Claims 1 to 7, wherein
data related to work is transmitted by the optical communication device (63).

## Patentansprüche

1. Eine optische Kommunikationsvorrichtung (63), umfassend:
einen Slave (61), der über optische Kommunikation mit einem Industrienetz verbunden ist und eine zweiseitige Bootfunktion mit einem sicheren Modus und einem Benutzermodus aufweist;
eine Benachrichtigungsvorrichtung (119) zum Übertragen von Übergangsbenachrichtigungsinformationen (141), die anzeigen, dass der Slave (61) in den Benutzermodus der zweiseitigen Bootfunktion zu einer anderen Vorrichtung in dem industriellen Netzwerk übergegangen ist, und
einen CDR-Abschnitt (112) zum Trennen eines Taktes, der in serielle Daten eingebettet ist, die durch eine serielle Kommunikation der optischen Kommunikation übertragen werden, wobei der Slave (61) umfasst:
den sicheren Modus zum Konfigurieren einer ersten Logikschaltung durch erste Konfigurationsinformationen (CF21); und
den Benutzermodus zum Konfigurieren einer zweiten Logikschaltung durch zweite Konfigurationsinformationen (CF22), die sich von den ersten Konfigurationsinformationen (CF21) unterscheiden, wobei die zweite Logikschaltung Steuerdaten (CD) verarbeitet, die von einem Master in dem Industrienetz über die serielle Kommunikation übertragen werden.

2. Die optische Kommunikationsvorrichtung (63) gemäß Anspruch 1, wobei
die Benachrichtigungsvorrichtung (119) vom sicheren Modus in den Benutzermodus übergeht und die Übergangsbenachrichtigungsinformation (141) als Reaktion auf den Abschluss der Konfiguration der zweiten Logikschaltung auf der Grundlage der zweiten Konfigurationsinformation (CF22) sendet.

3. Die optische Kommunikationsvorrichtung (63) gemäß Anspruch 1 oder 2, wobei
der Slave (61) einen Einrichtungsprozess des Industrienetzes beginnt, nachdem die Übergangsbenachrichtigungsinformation (141) über die optische Kommunikation übertragen wurde.

4. Die optische Kommunikationsvorrichtung (63) gemäß einem der Ansprüche 1 bis 3, wobei
die optische Kommunikationsvorrichtung (63) ferner einen Multiplexabschnitt (113) zum Multiplexen von über das Industrienetz übertragenen Steuerdaten (CD) und zum Übertragen der so gemultiplexten Steuerdaten (CD) durch Multiplex-Kommunikation enthält, wobei
die Benachrichtigungsvorrichtung (119) die Übergangsbenachrichtigungsinformationen (141) durch die Multiplexkommunikation überträgt.

5. Die optische Kommunikationsvorrichtung (63) gemäß Anspruch 4, wobei
der Multiplexerteil (113) ein Multiplexing durch ein Zeitmultiplexverfahren durchführt.

6. Die optische Kommunikationsvorrichtung (63) gemäß Anspruch 4 oder 5, wobei
die optische Kommunikationsvorrichtung (63) ferner einen Pseudosignalübertragungsabschnitt (117) enthält, der zwischen dem Slave (61) und dem Multiplexabschnitt (113) angeschlossen ist, wobei
der Pseudosignalübertragungsabschnitt (117) ein Signal pseudoerzeugt, das einem Kommunikationsstandard in dem industriellen Netzwerk entspricht, das erzeugte Signal an den Slave (61) überträgt, um eine Kommunikation mit dem Slave (61) herzustellen, und die Steuerdaten (CD) zwischen dem Multiplexabschnitt (113) und dem Slave (61) überträgt, nachdem die Kommunikation hergestellt wurde, und wobei
die Benachrichtigungsvorrichtung (119) den Pseudosignalübertragungsabschnitt (117) anweist, eine Kommunikation mit dem Slave (61) aufzubauen, nachdem sie die Übergangsbenachrichtigungsinformationen (141) übertragen hat.

7. Die optische Kommunikationsvorrichtung (63) gemäß Anspruch 1 oder 2, wobei
der sichere Modus ein Modus zum Konfigurieren der ersten Logikschaltung auf der Grundlage der ersten Konfigurationsinformation (CF21) ist, wenn der Slave (61) hochgefahren wird, und zum Bestimmen, ob die Konfiguration der zweiten Logikschaltung auf der Grundlage der zweiten Konfigurationsinformation (CF22) normal freigegeben ist, und wobei
der Benutzermodus ein Modus zur Verarbeitung der Steuerdaten (CD) durch die zweite Logikschaltung ist, nachdem sie aus dem sicheren Modus übergegangen ist.

8. Arbeitsmaschine (20) mit:
der optischen Kommunikationsvorrichtung (63) gemäß einem der Ansprüche 1 bis 7, wobei
Daten, die sich auf die Arbeit beziehen, von der optischen Kommunikationsvorrichtung (63) übertragen werden.

## Revendications

1. Dispositif de communication optique (63) comprenant :
un esclave (61) connecté à un réseau industriel par communication optique et ayant une fonction de démarrage double-face avec un mode sans échec et d'un mode utilisateur ;
un dispositif de notification (119) pour transmettre une information de notification de transition (141) indiquant que l'esclave (61) est passé au mode utilisateur du démarrage double-face à un autre dispositif du réseau industriel, et
une section CDR (112) pour séparer une horloge intégrée dans des données série transmises par une communication série de la communication optique, où l'esclave (61) présente :
le mode sans échec pour configurer un premier circuit logique au moyen de premières informations de configuration (CF21) ; et
le mode utilisateur pour configurer un deuxième circuit logique au moyen de deuxièmes informations de configuration (CF22) différentes des premières informations de configuration (CF21), le deuxième circuit logique traitant des données de commande (CD) transmises à partir d'un maître du réseau industriel par le biais de la communication série.

2. Dispositif de communication optique (63) selon la revendication 1, où
le dispositif de notification (119) passe du mode sans échec au mode utilisateur et transmet l'information de notification de transition (141) en réponse à l'achèvement de la configuration du deuxième circuit logique sur la base des deuxièmes informations de configuration (CF22).

3. Dispositif de communication optique (63) selon la revendication 1 ou 2, où
l'esclave (61) lance un processus d'établissement du réseau industriel après que l'information de notification de transition (141) a été transmise par le biais de la communication optique.

4. Dispositif de communication optique (63) selon l'une quelconque des revendications 1 à 3, où
le dispositif de communication optique (63) inclut en outre une section de multiplexage (113) pour multiplexer les données de commande (CD) transmises par le biais du réseau industriel et transmettre les données de commande (CD) ainsi multiplexées par le biais d'une communication multiplex, où
le dispositif de notification (119) transmet l'information de notification de transition (141) par le biais de la communication multiplex.

5. Dispositif de communication optique (63) selon la revendication 4, où
la section de multiplexage (113) effectue un multiplexage par un procédé de multiplexage temporel.

6. Dispositif de communication optique (63) selon la revendication 4 ou 5,
le dispositif de communication optique (63) inclut en outre une section de transmission de pseudo-signal (117) connectée entre l'esclave (61) et la section de multiplexage (113), où
la section de transmission de pseudo-signal (117) pseudo-génère un signal conforme à une norme de communication dans le réseau industriel, transmet le signal généré à l'esclave (61) pour établir une communication avec l'esclave (61), et transmet les données de commande (CD) entre la section de multiplexage (113) et l'esclave (61) après avoir établi la communication, et où
le dispositif de notification (119) ordonne à la section de transmission de pseudo-signal (117) d'établir une communication avec l'esclave (61) après avoir transmis l'information de notification de transition (141).

7. Dispositif de communication optique (63) selon la revendication 1 ou 2, où
le mode sans échec est un mode pour configurer le premier circuit logique sur la base des premières informations de configuration (CF21) lorsque l'esclave (61) est démarré et pour déterminer si la configuration du deuxième circuit logique sur la base des deuxièmes informations de configuration (CF22) est activée normalement, et où
le mode utilisateur est un mode pour traiter les données de commande (CD) par le deuxième circuit logique après avoir quitté le mode sans échec.

8. Machine de travail (20) comprenant :
le dispositif de communication optique (63) selon l'une quelconque des revendications 1 à 7, où .
les données relatives au travail sont transmises par le dispositif de communication optique (63).
